# EUROPÄISCHE PATENTANMELDUNG

(11) **EP 3 747 248 A1**
(43) Veröffentlichungstag der Anmeldung: **09.12.2020**
(21) Anmeldenummer: 20176992.4
(22) Anmeldetag: 28.05.2020
(51) Int. Cl.: A01B 69/00, A01B 79/00, A01D 41/127

(54) **SENSORANORDNUNG FÜR EIN LANDWIRTSCHAFTLICHES FAHRZEUG**

(30) Priorität: 31.05.2019 DE 102019207982
(71) Anmelder: Deere & Company, Moline, IL 61265 (US)
(72) Erfinder: Dima, Cristian, 68163 Mannheim (DE); Pfeiffer, Dohn W, 68163 Mannheim (DE)
(74) Vertreter: Holst, Sönke

(57) **Zusammenfassung**

Eine Sensoranordnung für ein landwirtschaftliches Fahrzeug umfasst einen ersten elektrooptischen Sensor (32, 32'), der ein erstes Sichtfeld (38, 38') mit einer optischen Achse (42, 42') aufweist und einen zweiten elektrooptischen Sensor (34, 34'), der ein zweites Sichtfeld (40, 40') mit einer optischen Achse (44, 44') aufweist. Die optischen Achsen (42,42', 44, 44') der beiden Sensoren (32, 32', 34, 34') schneiden sich.

## Beschreibung

Die Erfindung betrifft eine Sensoranordnung für ein landwirtschaftliches Fahrzeug, mit einem ersten elektrooptischen Sensor, der ein erstes Sichtfeld mit einer optischen Achse aufweist und einem zweiten elektrooptischen Sensor, der ein zweites Sichtfeld mit einer optischen Achse aufweist, sowie ein damit ausgerüstetes Fahrzeug.

### Stand der Technik

In der Landwirtschaft werden zunehmend Funktionen automatisiert. Um bestimmte Eigenschaften einer zu bewirtschaftenden Fläche vor und/oder nach der Bearbeitung sensorisch zu untersuchen und einen die Bearbeitung und/oder Lenkung kontrollierenden Aktor abhängig vom Ergebnis der sensorischen Untersuchung anzusteuern, finden oftmals elektrooptische Sensoren Verwendung, die als Kamera oder Laserscanner ausgeführt sein können. Da üblicherweise relativ große Arbeitsbreiten zu überwachen sind, z.B. bei einem Schneidwerk eines Mähdreschers die Breite des gesamten Schneidwerks, nutzt man eine einzige Kamera mit einem Weitwinkelobjektiv (s. beispielsweise EP 1 266 554 A2 oder EP 2 143 316 A1) oder verteilt mehrere Kameras seitlich nebeneinander über die zu überwachende Arbeitsbreite, deren Sichtfelder ebenfalls nebeneinander liegen (z.B. EP 2 545 761 A1).

### Problem

Bei der Verwendung von weitwinkligen Objektiven (typischerweise als Fischauge mit 180° oder größeren Bildwinkel oder Weitwinkel mit Bildwinkel von ca. 70 bis 90° ausgeführt) oder großen Abtastwinkelbereichen von Laserscannern verteilt sich die effektive Auflösung des Sensors über einen größeren Bereich des Felds, was eine nicht in allen Fällen ausreichende Auflösung der Signale zur Folge hat. Bei einem Sensor mit einer Kamera kann man beispielsweise die Abmessungen der Projektion eines Pixels auf dem Boden betrachten, die bei einem gegebenen Abstand zwischen Kamera und Boden mit dem Bildwinkel des Objektivs ansteigt. Im Ergebnis ist die Fähigkeit einer derartigen Weitwinkelkamera, weiter beabstandete Flächen mit einer zur Texturanalyse des auf dem Boden befindlichen Materials hinreichenden Auflösung zu detektieren, sehr begrenzt. Diese beeinflusst die Leistung von Systemen, die Texturinformation zur Klassifizierung des Materials verwenden, oder von Stereosystemen, nachteilig.

Verwendet man hingegen eine Kamera mit einem kleineren Bildwinkel, ist auch das Bildfeld begrenzt. Sollen größere Arbeitsbreiten abgedeckt werden, liegen die zu untersuchenden Teile des Bildes in größerem Abstand von der Kamera, was sich zum Beispiel bei Sichtbehinderung durch Staub o.ä. nachteilig auswirkt. Zudem ist der Bildwinkel, mit dem man auf das Feld oder den Erntegutbestand blickt, relativ flach, sodass man nahezu parallel zur Oberfläche des Feldes blickt und eine Stereo- oder Texturanalyse nur schlecht möglich ist. Eine Überwachung der Funktion eines breiten Schneidwerks ist jedoch nur mit einem Weitwinkelobjektiv möglich.

Bei den Konfigurationen mit nebeneinander angeordneten Kameras sind die Bildwinkel vom Fahrzeug hinweg auf den zu beobachtenden Bereich des Felds gerichtet, d.h. in der Regel direkt nach vorn oder nach unten. Der Sensor ist demnach relativ nahe an der zu sensierenden Fläche angeordnet, sodass diese Fläche relativ klein ist. Hierbei ergeben sich entweder Lücken zwischen benachbarten Sichtfeldern oder tote Winkel insbesondere in der Nähe des Fahrzeugs.

Das vorliegende Problem wird darin gesehen, ein elektrooptisches Sensorsystem für ein landwirtschaftliches Fahrzeug dahingehend zu verbessern, dass die erwähnten Nachteile vermieden werden oder zumindest in einem verminderten Maße vorliegen.

### Lösung

Die vorliegende Erfindung wird durch die Patentansprüche definiert.

Eine Sensoranordnung für ein landwirtschaftliches Fahrzeug umfasst einen ersten elektrooptischen Sensor, der ein erstes Sichtfeld mit einer optischen Achse aufweist und einem zweiten elektrooptischen Sensor, der ein zweites Sichtfeld mit einer optischen Achse aufweist. Beide Sensoren sind derart beabstandet positioniert und ausgerichtet, dass sich die optischen Achsen der beiden Sensoren im Abstand von den beiden Sensoren schneiden.

Mit anderen Worten blickt der erste Sensor in einem größeren Maß in die Richtung des zweiten Sensors als der zweite Sensor und der zweite Sensor blickt in einem größeren Maß in die Richtung des ersten Sensors als der erste Sensor, was dazu führt, dass sich die optischen Achsen der beiden Sensoren schneiden. Man erhält somit eine Art von schielender Anordnung, die es ermöglicht, die Sensoren in größerem Abstand von der zu beobachtenden Fläche anzuordnen, als wenn jeder Sensor direkt auf die ihm benachbarte Fläche blicken würde. Die Sensoren werden somit, bei gegebener Geometrie des Fahrzeugs, an dem die Sensoren angebracht sind, weiter von der zu beobachtenden Fläche weggerückt, um einen besseren Überblick zu erhalten, ähnlich wie ein Fotograf von einer zu fotografierenden Gruppe nach hinten geht, wenn nicht alle Personen auf das Bild passen. Dadurch erhält man einen besseren Überblick über den zu sensierenden Bereich als bei bisherigen Sensoranordnungen.

Die elektrooptischen Sensoren können jeweils als mit einem Bildverarbeitungssystem verbundene Kameras ausgebildet sein. Die Kameras können als monokulare oder Stereokameras ausgeführt sein, oder als Flugzeit- (PMD-) Kamera. Es ist auch möglich, optische Entfernungsmesser (LIDAR bzw. Laser-Entfernungsmesser) zu verwenden, die im sichtbaren oder einem beliebigen anderen elektromagnetischen Wellenlängenbereich einschließlich von Radiowellen arbeiten und jeweils ein Sichtfeld ein- oder zweidimensional abtasten und anhand der Laufzeit die Entfernung zum Reflexionspunkt messen.

Die Sensoranordnung kann an einem Fahrzeug angebracht und mit einer Kontrolleinrichtung verbunden werden, die eingerichtet ist, mindestens einen Aktor und/oder eine Anzeigeeinrichtung basierend auf dem Signal der Sensoren anzusteuern. Im ersten Fall kann die Sensoranordnung eine bestimmte Eigenschaft eines zu bearbeitenden Felds erfassen und die Kontrolleinrichtung den Aktor abhängig davon ansteuern, z.B. die Geschwindigkeit einer Erntemaschine abhängig von der Bestandsdichte vor der Erntemaschine kontrollieren oder die Erntemaschine entlang einer Bestandskante oder eines Schwads lenken oder eine Hacke entlang einer Reihe führen, oder eine bestimmte Eigenschaft des bearbeiteten Felds erfassen und die Kontrolleinrichtung den Aktor abhängig davon ansteuern, z.B. die Geschwindigkeit bei der Bodenbearbeitung abhängig von der Glattheit des Bodens vor oder nach der Bearbeitung kontrollieren oder die Strohverteilung im Sinne einer Vergleichmäßigung über den Schnittbreite optimieren. Im zweiten Fall kann der Bediener des Fahrzeugs anhand des angezeigten Bilds evtl. erforderliche Eingaben in eine Bedienerschnittstelle tätigen, um einen Aktor entsprechend anzusteuern.

Der erste Sensor kann an einer ersten Seite einer Anbringungsplattform des Fahrzeugs befestigt sein, der zweite Sensor an einer zweiten Seite der Anbringungsplattform befestigt sein, während das erste Sichtfeld zur zweiten Seite hin ausgerichtet ist und das zweite Sichtfeld zur ersten Seite hin ausgerichtet ist.

Die Anbringungsplattform kann das Dach einer Kabine des Fahrzeugs oder ein Fahrgestell des Fahrzeugs sein.

Die Sensoren können nach vorn (z.B. auf den Bestand des Ernteguts vor dem Fahrzeug oder ein mit einem Bodenbearbeitungsgerät zu bearbeitendes Feld) oder nach hinten (z.B. auf das mit einem Bodenbearbeitungsgerät bearbeitete oder mit einem Strohhäcksler mit Stroh beaufschlagte Feld) oder zur Seite (z.B. auf das von einem Schneidwerk hinterlassene Stoppelbild oder den Bestand neben einer gerade abgeernteten Schneise) blicken und/oder zur Erfassung der Umgebung des Fahrzeugs (einschließlich möglicher Hindernisse, Transportfahrzeuge, Lebewesen) und/oder eines Teils des Fahrzeugs (z.B. eines Erntevorsatzes insbesondere in Form eines Schneidwerks oder Maispflückers und des sich darin bewegenden Ernteguts, oder eines Bodenbearbeitungsgeräts) angeordnet sein, insbesondere um die Funktion des beobachteten Teils (einschließlich eines Anbaugeräts) des Fahrzeugs zu überwachen oder eine Eigenschaft des Felds vor oder nach der Bearbeitung zu sensieren und einen Aktor darauf basierend anzusteuern.

Das Fahrzeug kann in Form eines Mähdreschers ausgeführt sein, wobei die Sensoranordnung auf das Feld vor einem Schneidwerk und/oder das Schneidwerk oder auf das Feld rückwärtig des Mähdreschers ausgerichtet ist. Es kann sich bei dem Fahrzeug auch um eine andere Art von Erntemaschine handeln, z.B. einen Feldhäcksler, eine Ballenpresse oder einen Baumwollpflücker, oder um ein beliebiges anderes landwirtschaftliches Fahrzeug, z.B. zum Düngen oder Spritzen oder Hacken oder zur Bodenbearbeitung, das anhand der Signale der Sensoranordnung automatisch entlang einer Fahrgasse gelenkt wird und/oder dessen Ausbringrate anhand der Signale der Sensoranordnung abhängig vom sensierten Pflanzenzustand automatisch kontrolliert wird.

Der Aktor kann demnach zur Lenkung oder zur Verstellung eines Arbeitsparameters des Fahrzeugs eingerichtet sein.

### Ausführungsbeispiel

In den Zeichnungen sind zwei nachfolgend näher beschriebene Ausführungsbeispiele der Erfindung dargestellt. Es zeigt:
- Fig. 1: eine Draufsicht auf einen Mähdrescher nach einer ersten Ausführungsform und,
- Fig. 2: eine Draufsicht auf einen Mähdrescher nach einer zweiten Ausführungsform.

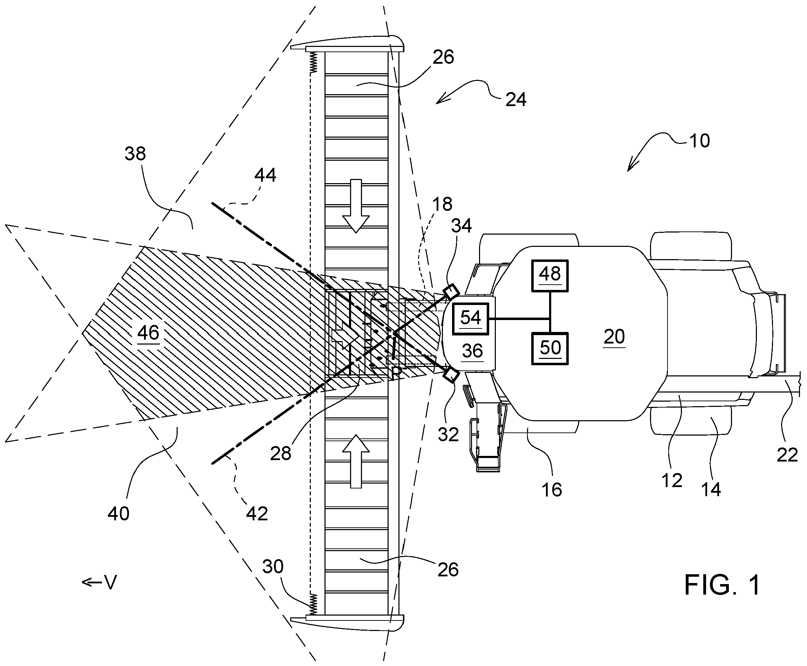

Die Figur 1 zeigt eine landwirtschaftliche Erntemaschine 10 in Form eines Mähdreschers mit einer tragenden Struktur 12, die mit im Eingriff mit dem Erdboden stehenden hinteren, lenkbaren Rädern 14 und vorderen, angetriebenen Rädern 16 versehen ist, welche die Erntemaschine 10 im Betrieb in einer Vorwärtsrichtung V über ein abzuerntendes Feld bewegen. Obwohl der Mähdrescher 10 mit Rädern 14, 16 dargestellt ist, könnte er auch mit zwei oder vier Raupenlaufwerken versehen sein. Ein Erntevorsatz 24 wird zum Ernten von Erntegut verwendet und führt es einem Schrägförderer 18 zu, die es in das Innere der Erntemaschine 10 fördert, wo es in an sich bekannter Weise gedroschen, getrennt und gereinigt wird. Das saubere Korn wird schließlich in einem Korntank 20 abgelegt wird, aus dem es durch einen Entladeförderer 22 auf ein Transportfahrzeug überladen werden kann. Anstelle an einem Mähdrescher 10 könnte die Erfindung auch an einem Feldhäcksler Verwendung finden.

Der Erntevorsatz 24 ist als Schneidwerk mit Querförderbändern 26 und einem mittigen, nach hinten fördernden Förderband 28) ausgeführt, an deren Vorderseite sich eine Schneideinrichtung 30 befindet.

An den vorderen Ecken des Dachs 36 einer Kabine der Erntemaschine 10 ist eine Sensoranordnung angebracht, die einen ersten elektrooptischen Sensor 32 und einen zweiten elektrooptischen Sensor 34 umfasst, bei denen es sich jeweils um monokulare oder Stereokameras handeln kann. Der erste Sensor 32 hat ein (konisches oder pyramidenförmiges) Sichtfeld 38 mit einer optischen Achse 42. Der zweite Sensor 34 hat ein (konisches oder pyramidenförmiges) Sichtfeld 40 mit einer optischen Achse 44.

Der erste Sensor 32 ist an der in Vorwärtsrichtung V vorderen, linken Ecke des Dachs 36 angebracht und seine optische Achse 42 ist schräg nach unten und vorn geneigt, jedoch gegenüber der Vorwärtsrichtung V schräg nach rechts ausgerichtet. Der zweite Sensor 34 ist an der in Vorwärtsrichtung V vorderen, rechten Ecke des Dachs 36 angebracht und seine optische Achse 44 ist schräg nach unten und vorn geneigt, jedoch gegenüber der Vorwärtsrichtung V schräg nach links ausgerichtet. Die optischen Achsen 42, 44 sind spiegelsymmetrisch zur vertikalen Längsmittelebene der Erntemaschine 10 ausgerichtet und jeweils im gleichen Maß nach unten geneigt. Somit kreuzen sich die optischen Achsen 42, 44 an einem Punkt P, der vor den Sensoren 32, 34 liegt.
Die Sensoren 32, 34 sind demnach weiter von den zu untersuchenden Bereichen, bei denen es sich um den Erntegutbestand vor dem Erntevorsatz 24 und/oder den Erntevorsatz 24 handelt, beabstandet angeordnet, als wenn ihre optischen Achsen 42, 44 genau nach vorn ausgerichtet wären oder die Achse 42 des ersten Sensors 32 nach links und die Achse des zweiten Sensors 34 nach rechts gerichtet wäre. Durch die größeren Abstände können die Sensoren 32, 34 (bei gegebenen Abmessungen der zu beobachtenden Bereiche) Objektive mit kleinerem Bildwinkel als bisher verwenden, die unter geringeren Abbildungsfehlern als weitwinkligere Objektive leiden und preiswerter verfügbar sind. Zudem ergibt sich in der Mitte vor dem Erntevorsatz ein Überlappungsbereich 46, der dort robustere Messungen ermöglicht als bei Beobachtung mit nur einem einzigen Sensor 32 oder 34, und es besteht eine vereinfachte Möglichkeit, die Sensoren zueinander zu positionieren, indem man ihre Bilder vergleicht.

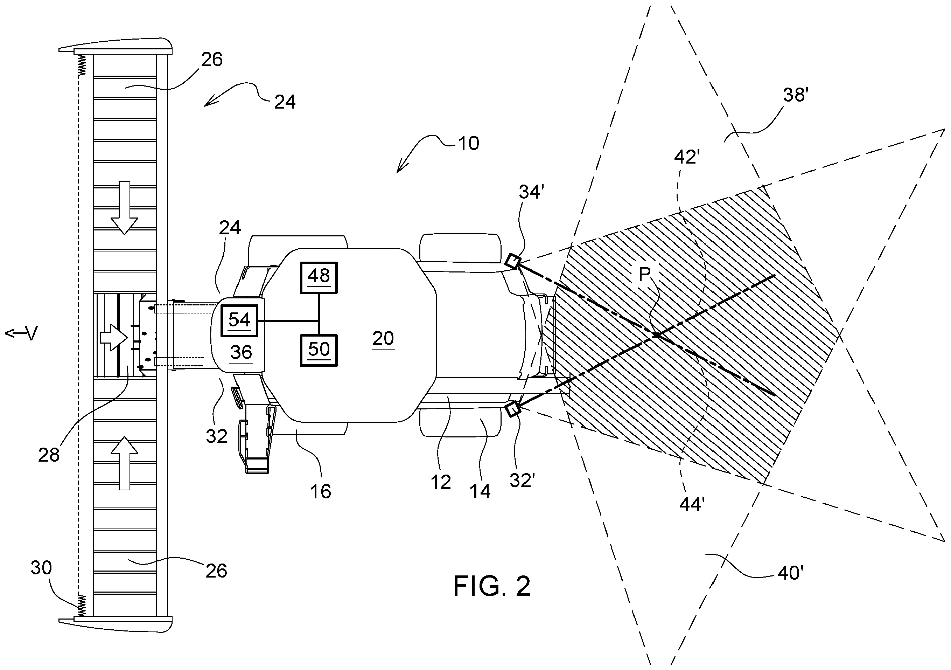

Die Sensoren 32, 34 sind signalübertragend mit einer Kontrolleinrichtung 48 verbunden, die ihrerseits mit einer Anzeigeeinrichtung 54 und einem oder mehreren Aktor(en) 50 verbunden ist. Die Bildsignale der Bildsensoren der Sensoren 32, 34 werden durch Bildverarbeitungssysteme der Sensoren 32, 34 oder der Kontrolleinrichtung 48 oder dazwischen geschaltete Bildverarbeitungssysteme verarbeitet. Die Kontrolleinrichtung 48 steuert die Anzeigeeinrichtung 54 an, geeignete Bilder anzuzeigen, auf denen der Bediener einerseits den Bestand vor dem Erntevorsatz 24 und andererseits auch den Erntevorsatz 24 sehen und die Funktion des Erntevorsatzes überwachen kann, wobei ggf. erkannte Probleme, wie Wickeln des Ernteguts um die Haspel oder Querförderprobleme optisch hervorgehoben werden können. Zusätzlich oder alternativ wird der Aktor 50 abhängig vom Signal der Sensoren 32, 34 angesteuert, um beispielsweise die Vortriebsgeschwindigkeit der Erntemaschine 10 abhängig von der Bestandsdichte zu kontrollieren und/oder den Erntevorsatz 24 entlang einer Bestandskante zu lenken. Auch kann die Einstellung von Arbeitsparametern des Erntevorsatzes (Haspelposition in horizontaler und vertikaler Richtung, Arbeitshöhe etc.) durch die Kontrolleinrichtung selbsttätig anhand des Signals der Sensoren 32, 34 kontrolliert werden.
Bei der Ausführungsform nach Figur 2 blicken die Sensoren 32', 34' vom oberen, hinteren Rand des Fahrgestells 12 der Erntemaschine 10 nach hinten. Der erste Sensor 32' ist an der in Vorwärtsrichtung V hinteren, linken Ecke des Fahrgestells 12 angebracht und seine optische Achse 42' ist schräg nach unten und hinten geneigt, jedoch gegenüber der Vorwärtsrichtung V schräg nach rechts ausgerichtet. Der zweite Sensor 34' ist an der in Vorwärtsrichtung V hinteren, rechten Ecke des Fahrgestells 12 angebracht und seine optische Achse 44' ist schräg nach unten und hinten geneigt, jedoch gegenüber der Vorwärtsrichtung V schräg nach links ausgerichtet. Die optischen Achsen 42', 44' sind spiegelsymmetrisch zur vertikalen Längsmittelebene der Erntemaschine 10 ausgerichtet und jeweils im gleichen Maß nach unten geneigt. Somit kreuzen sich die optischen Achsen 42, 44 an einem Punkt P, der hinter den Sensoren 32', 34' liegt.

Die Auswertung und Anzeige der Signale der Sensoren 32', 34' erfolgt analog der Beschreibung zur Figur 1. Hier dienen die Signale der Sensoren 32', 34' dazu, einen Aktor 50 zu verstellen, der mit einer Verteileinrichtung des Strohhäckslers der Erntemaschine 10 zusammenwirkt und dazu dient, die Verteilung der Erntegutreste über die Arbeitsbreite des Erntevorsatzes 24 zu vergleichmäßigen, wozu Leitbleche oder Drehzahlen von Strohverteilern verstellt werden können.

## Patentansprüche

1. Sensoranordnung für ein landwirtschaftliches Fahrzeug, mit einem ersten elektrooptischen Sensor (32, 32'), der ein erstes Sichtfeld (38, 38') mit einer optischen Achse (42, 42') aufweist und einem zweiten elektrooptischen Sensor (34, 34'), der ein zweites Sichtfeld (40, 40') mit einer optischen Achse (44, 44') aufweist, **dadurch gekennzeichnet, dass** die Sensoren (32, 32', 34, 34') derart beabstandet positioniert und ausgerichtet sind, dass sich die optischen Achsen (42,42', 44, 44') der beiden Sensoren (32, 32', 34, 34') im Abstand von den beiden Sensoren (32, 32', 34, 34') schneiden.

2. Sensoranordnung nach Anspruch 1, wobei die elektrooptischen Sensoren (32, 32', 34, 34') jeweils als mit einem Bildverarbeitungssystem verbundene Kamera ausgebildet sind.

3. Landwirtschaftliches Fahrzeug mit einer Sensoranordnung nach Anspruch 1 oder 2 und einer Kontrolleinrichtung (48) die eingerichtet ist, wenigstens einen Aktor (50) und/oder eine Anzeigeeinrichtung (54) basierend auf dem Signal der Sensoren (32, 32', 34, 34') anzusteuern.

4. Fahrzeug nach Anspruch 3, wobei der erste Sensor (32, 32') an einer ersten Seite einer Anbringungsplattform des Fahrzeugs befestigt ist, der zweite Sensor (34, 34') an einer zweiten Seite der Anbringungsplattform befestigt ist, das erste Sichtfeld (38, 38') zur zweiten Seite hin ausgerichtet ist und das zweite Sichtfeld (40, 40') zur ersten Seite hin ausgerichtet ist.

5. Fahrzeug nach Anspruch 4, wobei die Anbringungsplattform das Dach (36) einer Kabine des Fahrzeugs oder ein Fahrgestell (12) des Fahrzeugs ist.

6. Fahrzeug nach einem der Ansprüche 3 bis 5, wobei die Sensoren (32, 32', 34, 34') nach vorn oder nach hinten oder zur Seite blicken.

7. Fahrzeug nach einem der Ansprüche 3 bis 6, wobei die Sensoren (32, 32', 34, 34') zur Erfassung der Umgebung des Fahrzeugs und/oder eines Teils des Fahrzeugs angeordnet sind.

8. Fahrzeug nach einem der Ansprüche 3 bis 7, in Form eines Mähdreschers (10), wobei die Sensoranordnung auf das Feld vor einem Schneidwerk (24) und/oder das Schneidwerk (24) oder auf das Feld rückwärtig des Mähdreschers (10) ausgerichtet ist.

9. Fahrzeug nach Anspruch 8, wobei der Aktor (50) zur Lenkung oder zur Verstellung eines Arbeitsparameters des Fahrzeugs eingerichtet ist.
